# EUROPEAN PATENT APPLICATION

(11) **EP 0 596 747 A1**
(43) Date of publication of application: **11.05.1994**
(21) Application number: 93308859.3
(22) Date of filing: 05.11.1993
(51) Int. Cl.: B65D 75/58, B26F 1/20, B29C 65/00, B32B 3/24, B26D 1/24

(54) **Easy open package, film and method of construction**

(30) Priority: 06.11.1992 US 973167
(71) Applicant: CURWOOD, INC., Oshkosh, Wisconsin 54903-2968 (US)
(72) Inventor: Schlaeppi, Blake, New London, Wisconsin 54961 (US); Luepke, Paul, Oshkosh, Wisconsin 54901 (US); Mathison, Matthew, Neenah, Wisconsin 54956 (US); Turner, Donald L., Appleton, Wisconsin 54914 (US)
(74) Representative: Wain, Christopher Paul

(57) **Abstract**

An easy open package (30) comprises at least one wall (32,33) of a multi-layer flexible packaging film which includes an inner layer (7A) and an outer layer (9A) and a plurality of rows (8A,8B,8C) of linearly extending, laterally spaced slits (8) formed in one layer (9A) thereof, extending parallel to and inwardly adjacent a side edge of the film. The slits penetrate through one (9A) of the film layers. but not through the other layer (7A) and facilitate the rupture of all layers of the film when force is applied to effect an easy opening of a package made from the film.

## Description

This invention relates to an easy open package, a film for making such a package, and to a method of constructing a package from the film.

Many efforts have been made, particularly in the food industry, to increase the ease of opening a consumer oriented plastic package. These include various methods to initiate a tear in the package and to utilize tearing of a package wall along a predetermined tear line to provide access to the contents of a package. There are several ways in which to initiate such a tear, such as by the inclusion of tear notches, edge perforations, serrations in the seals, tear strips and laser etching. Most of these methods fully penetrate the film thickness and are limited to providing tear lines in the sealed area. Often, tear notches end up in the area of the product receiving chamber due to manufacturing malfunctions. This results in the package's integrity being compromised and product spoilage and/or leakage occurring. Oriented films such as oriented polypropylene have been used in such packages because they tend to resist tearing and opening unless they are perforated near the edge to initiate such tearing. Once started, the tear tends to propagate very easily.

A process called "MAGIC CUT", described in U.S. Patent 4,919,272, is a rather recent addition to the easy open package art. Because it actually punctures through the film, it can only be used in the sealed area when barrier needs to be maintained. The MAGIC CUT process is applied to the film after lamination when the film is going through the slitter rewinder step. The MAGIC CUT process is applied by a toothed wheel that creates little slits oriented perpendicular to the edge in which they are formed. These make micro tears in the transverse direction of the oriented film. The MAGIC CUT process is generally used with packages with machine direction side seals and can only initiate transverse direction tear.

"FANCY CUT" is another method of making packages open easier. This process is described in U.S. Patent 4,543,279. This method is similar to MAGIC CUT in that it is done off line after lamination.

A laser can be used to form a line of weakness in a packaging film as described in U.S. Patent 3,790,744. This also offers a directed tear. A laser can only be used for a machine direction tear. A laser can also be mounted on a rewinder and the line of weakness is applied to the film after lamination. This approach tends to work best with a film incorporating aluminum foil or another laser-blocking material, which resists laser penetration. The laser can cause problems with non-foil films by either burning through the whole film or destroying the barrier along the etch. EVOH, whose use is currently on the rise as the main barrier component in food packaging, will absorb more laser energy than nylon, polyethylene or PET.

We have now devised an improved easy open package and film for making it.

According to the present invention, there is provided an easy open package adapted to enclose a product but provide easy access thereto when desired, said package comprising a first package wall formed of multi-layer flexible packaging film including an inner layer positioned to lie adjacent the product to be packaged and an outer layer secured to said inner layer; a second package wall overlying said first package wall including an inner layer and an outer layer; means enclosing said package about its periphery such that a product receiving chamber is formed between said first and second package walls; at least one row of linearly oriented slits in said first package wall, said slits penetrating through one layer of said first package wall but not extending into said other layer; at least one row of linearly oriented slits in said second package wall, said slits penetrating through one layer of said second package wall but not extending into said other layer; said slits in said first and second package walls being disposed over said product receiving chamber, whereby said slits in said layers of said first and second package walls facilitate the rupture of the other layers of said first and second package walls secured thereto, when force is applied, to effect easy opening of said package along the row of slits and to provide ready access to the product in said product receiving chamber.

The invention also provides an easy open package adapted to enclose a product but provide easy access thereto when desired, said package including a first package wall formed of multi-layer flexible packaging film including an inner layer positioned to lie adjacent the product to be packaged and an outer layer secured to said inner layer; a product receiving chamber defined in said package; means enclosing said package about its periphery; a plurality of rows of linearly oriented slits in said first package wall, each row extending from one edge of said package to another edge, each row being laterally separated from and extending parallel to its adjacent row of slits, each slit penetrating through one layer of said first package wall but not extending into said other layer, said slits disposed over said product receiving chamber, whereby said slits in said one layer of said first package wall facilitate the rupture of the other layer when force is applied to effect easy opening of said package along the rows of slits and to provide ready access to the product in said product receiving chamber.

The invention further provides a flexible packaging film especially adapted for use in making an easy open package, said film comprising a multi-layer flexible packaging film including an inner layer and an outer layer with a plurality of rows of linearly extending slits formed in one layer thereof extending parallel to and inwardly adjacent a side edge of said film, said slits penetrating through one of said layers but not extending into said other layer, each row being laterally separated from and extending parallel to its adjacent row of slits, whereby said slits facilitate the rupture of all layers of said film, when force is applied, to effect easy opening of a package made from said film.

There is also included, in accordance with the invention, a process for producing a multi-layer flexible packaging film especially adapted for use in making an easy open package, the steps of the process including forming a plurality of rows of laterally spaced, linearly extending slits in one layer of said film, said slits extending parallel to and inwardly adjacent a side edge of said layer; and laminating a second layer of film to said first layer.

The invention further includes a process for producing an easy open package adapted to enclose a product but provide easy access thereto when desired, the steps of the process including providing a first package wall of multi-layer flexible packaging film including an inner layer positioned to lie adjacent the product to be packaged and an outer layer secured to said inner layer; forming at least one row of linearly oriented slits in said first package wall extending parallel to an edge of said package wall, said slits penetrating through one layer of said first package wall but not extending into said other layer; providing a second packaging wall including an inner layer and an outer layer; forming at least one row of linearly oriented slits in said second package wall extending parallel to an edge of said second package wall, said slits penetrating through one layer of said second package wall but not extending into said other layers; and securing said first package wall to said second package wall about the periphery thereof such that a product receiving chamber is formed between said first and second package walls.

In order that the invention may be more fully understood, reference is made to the accompanying drawings, wherein:

Figure 1 shows a perspective view of one preferred embodiment (by way of example only) of a package according to the present invention.

Figure 2 shows a cross-sectional view taken along line 2-2 of Figure 1, of a seal portion of a package.

Figure 3 shows an exploded elevational view of a top portion of the package shown in Figure 1.

Figure 4 shows an elevational view of a piece of packaging film used to form the package of Figure 1.

Figure 5 shows a side view, in schematic, of one form of machinery useful for the manufacture of film of the present invention.

Figure 6 shows a top view of an arrangement of knives which can be used in forming one embodiment of the slits in the packaging film.

Figure 7 shows a perspective view of an alternate embodiment of a package incorporating the features of the present invention.

Figure 8 shows a cross-sectional view of the package of Figure 7.

Figure 9 shows a cross sectional view of another embodiment of a package incorporating the features of the present invention.

Figure 10 shows a perspective view of an additional embodiment of a package.

Figure 11 shows a cross-sectional view taken along lines 11-11 of Figure 10.

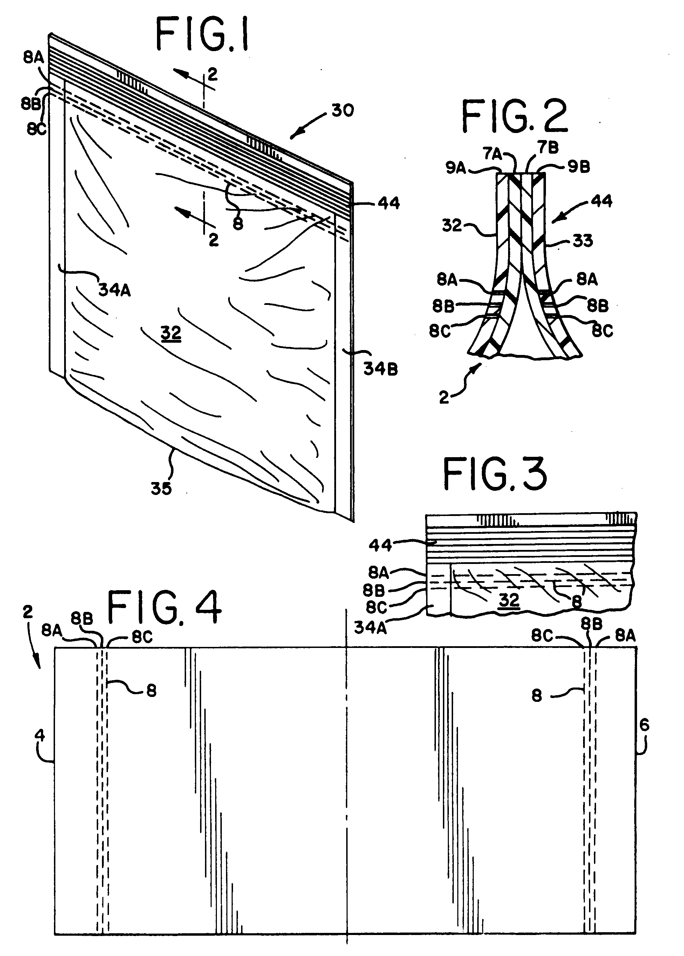

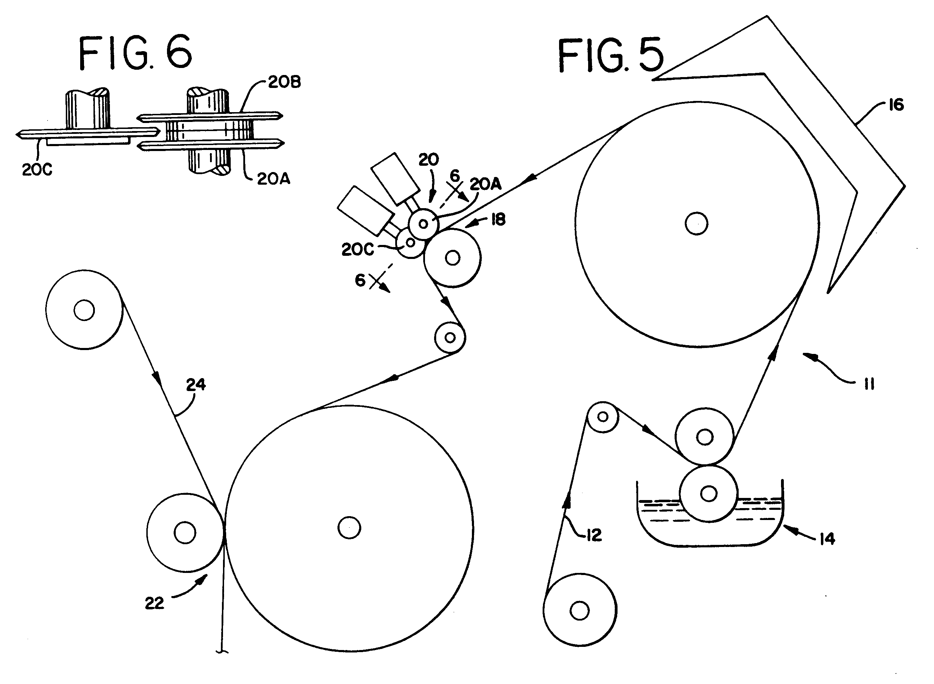

The present invention covers a packaging film, an easy open package made therefrom and the processes for manufacture of the film and manufacture of the package. A segment of film 2 is shown in Figure 4. The film 2 is a multi-layer flexible packaging film including a first side edge 4 and a second side edge 6. A plurality of rows 8A, 8B, 8C of slits 8 are formed in the film extending parallel to and inwardly adjacent of each of the side edges 4 and 6. The film 2, as best shown in Figure 2, includes an inner layer 7 and an outer layer 9. The outer layer 9 is preferably secured to the inner layer 7 by an adhesive (not shown) or by other lamination or extrusion coating techniques. The inner layer 7 may be composed of any suitable polymer such as polyethylene, plain or saran coated, or ethylene vinyl alcohol (EVOH) coextrusion with polyethylene. The inner layer 7, depending upon its composition, can impart functional characteristics to a package manufactured from the film 2, for instance, oxygen barrier properties, moisture barrier properties, etc. The outer layer 9 may be composed of any suitable polymer material, such as oriented polypropylene, and should have a higher melting point than the polymer used for the inner layer 7 if the package is designed to be heat sealable. Although the preferable construction of the multilayer film is generally two polymer layers, there are certain applications which can use a layer of foil and/or a layer of paper in place of, or in addition to a polymer layer. The resultant film can include three or more layers in total. Such a composition is still considered to be a multi-layer flexible packaging film.

Preferably, the film 2 includes three rows 8A, 8B, 8C of slits 8 linearly oriented and disposed parallel and adjacent to each side edge 4 and 6 of the film 2. In some instances, it may be preferable to vary the number of rows. Each of the slits 8 penetrates through one of the layers of the film but does not extend into the other layer. As illustrated in Figure 2, the slits 8 penetrate through the outer layers 9A and 9B but do not extend into the inner layers 7A and 7B. Preferably, the slits 8 penetrate through the outer layer 9 of the film 2, but in some instances it may be preferable to form the slits in the inner layer 7. The slits 8 of each row are approximately one-eighth inch long and are linearly spaced from each other by a distance of approximately one sixty-fourth of an inch. Each row of slits 8A, 8B and 8C is laterally separated from and extends parallel to its adjacent row of slits. The orientation of slits between adjacent rows may be staggered as shown in Figure 4 or may be aligned or may be entirely random. The lateral separation between each row of slits is approximately one sixteenth of an inch in the preferred embodiment. It is also possible to laterally move the rows of slits to multiple positions along the surface of the film 2 parallel to the side edges 4 and 6 depending upon the configuration of the package which is ultimately desired. Figure 4 shows each row of slits formed as intermittent slits, linearly spaced. It is also within the purview of the invention to form each row as a continuous, uninterrupted score line but this arrangement presents certain manufacturing difficulties.

As best seen in Figure 5, the film 2 of the present invention can be manufactured on machinery 11 by applying an adhesive to one side of a first plastic packaging film 12 by use of an adhesive application assembly 14. The first film 12 then travels through a drying oven 16 where solvent is removed from the adhesive. The film 12 then travels through a cutting assembly 18 where the rows of slits 8 are cut into the film 12 through the side of the film 12 on which the adhesive is applied. The cutting assembly 18 includes a plurality of sets of knives 20, one set for each row of slits to be provided. Each knife, 20A, 20B, 20C is disposed in a staggered arrangement as shown in Figure 6. Knives 20A and 20B are disposed adjacent to one another and a third knife 20C is disposed slightly offset of the first two knives 20A and 20B and laterally spaced between the knives 20A and 20B. This arrangement provides for consistent lateral spacing of the rows of slits 8 with respect to one another. Rather than a continuous knife edge, the knives may have serrated teeth to produce the linearly spaced slits shown in the drawings.

The film 2 of the embodiment shown in Figure 4 would require two such sets of knives 20 since two sets of rows of slits 8 are disposed in the film 2, one set along each side edge 4 and 6. In manufacturing the film 2 it is common to cut the rolls of film into narrower widths by means of a rewinder to form a plurality of such rolls of film at the same time.

After the film 12 passes through the cutting assembly 18, it then travels to a laminator assembly 22 where a second plastic packaging film 24 is laminated to the adhesive containing slit side of the first plastic packaging film 12. The finished multi-layer film 2 is then wound onto a roll where it is ready to be formed into packages. Although adhesive lamination is disclosed as the preferred method of adhering the inner layer 7 and the outer layer 9 together, other lamination or extrusion coating techniques can also be used. Furthermore, the disclosed method contemplates two layers 7 and 9 but under certain circumstances additional layers may be added.

A preferred embodiment of an easy open package 30 is shown in Figure 1. The package 30 includes a first package wall 32 and a second package wall 33 shown in Figure 2. The two package walls 32 and 33 are joined about three edges to form a package with a product receiving chamber (not shown) and an opening through which product may be inserted into the product receiving chamber. The side edges of the package 30 are formed by seals 34A and 34B which are preferably heat seals. The bottom edge 35 is formed by a fold.

As shown in Figure 2, the first package wall 32 of the preferred embodiment includes an inner layer 7A positioned to lie adjacent the product to be packaged and an outer layer 9A secured to the inner layer 7A. As shown in Figure 2, the second package wall 33 includes an inner layer 7B and an outer layer 9B secured to the inner layer 7B. Both the first and second package walls 32 and 33 of the package 30 can be composed of the film 2 previously discussed. After product has been introduced into the product receiving chamber, a seal 44 is formed along the top edge of the package, preferably by heat. The first and second package walls 32 and 33 of the package 30, as shown in Figure 2, each include three rows of linearly oriented slits 8A, 8B, 8C oriented parallel to and adjacent the seal 44. The rows of slits are disposed inwardly of the seal 44 and oriented to provide access to the product receiving chamber. The rows of slits in the first package wall 32 overlie and are aligned with the rows of slits in the second package wall 33. This is important because, at least in this package embodiment, the approximate alignment of the slits in both top and bottom package walls greatly facilitates opening of the package. Providing multiple rows of slits also provides the advantage that if a particular row 8A on the top package wall is misaligned with the corresponding row 8A on the bottom package wall, it is likely that it will be approximately aligned with one of the other rows 8B or 8C.

As can best be seen in Figure 2, each of the slits 8A, 8B, 8C penetrates through the outer layers 9A and 9B of the first and second package walls 32 and 33 respectively but does not extend into the inner layers 7A and 7B of either package wall 32 or 33. Each row of slits 8A, 8B, 8C is laterally separated from and extends parallel to its adjacent row of slits.

In opening the package 30, the seal 44 is grasped in one hand and pulled along the aligned rows of slits. The slits 8 facilitate the rupture of the inner layers 7A and 7B of the first and second package walls 32 and 33 when force is applied thereby providing access to the product in the product receiving chamber.

The package 30 of the preferred embodiment is made by folding the film 2 of Figure 4 over onto itself to form first and second package walls 32 and 33 such that the rows of slits 8A, 8B, 8C of the first package wall 32 overlie and are linearly aligned with the corresponding rows of slits of the second package wall 33. The seals 34 are formed along the side edges of the package perpendicular to the rows of slits 8. Product, for example grated cheese, is then disposed within the product receiving chamber of the package 30 and the heat seal 44 is formed along the top edge of the package 30 parallel to the rows of slits 8 such that the rows of slits 8 are disposed between the heat seal 44 and the product receiving chamber.

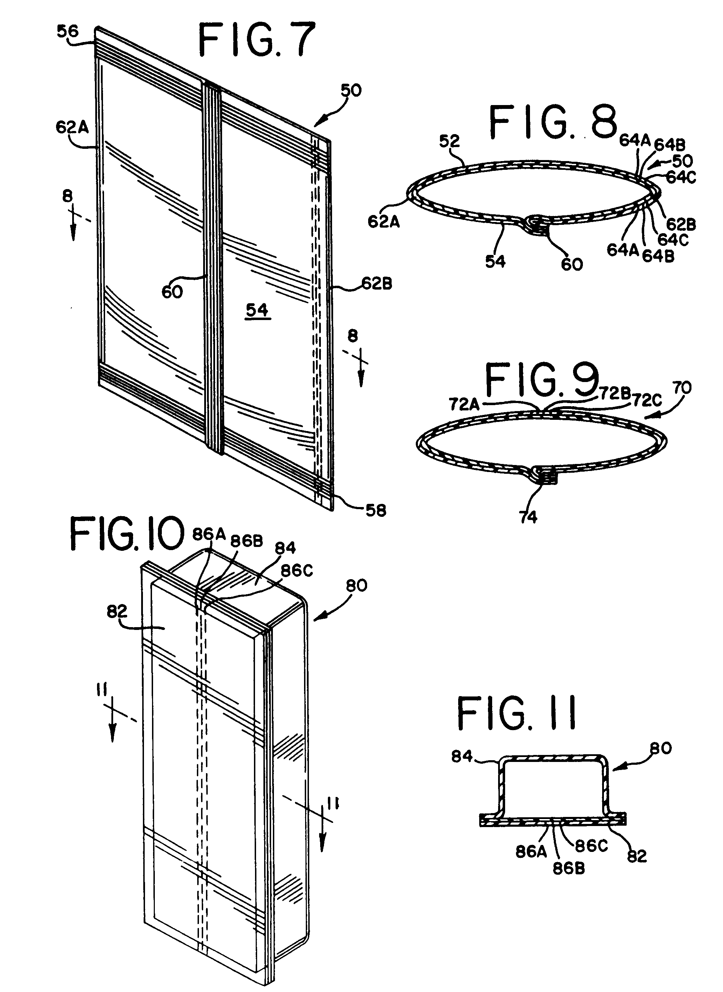

An additional embodiment of a package incorporating features of the present invention is shown in Figures 7 and 8. In this embodiment, a package 50 includes a first package wall 52 and a second package wall 54. The first and second package walls 52 and 54 are of multi-layer construction like the first and second package walls 32 and 33 of the package 30. The package 50 further includes a top seal 56, a bottom seal 58 and a back or fin seal 60.

The package 50 is formed from a single sheet of packaging material. The fin seal 60 is formed by taking two film edges and sealing them to each other. The side edges of the package 50 are each formed by folds 62A and 62B. Three rows of slits 64A, 64B, 64C are disposed parallel to and adjacent fold 62B in each package wall 52 and 54. The rows of slits 64 are similar to the rows of slits 8A, 8B, 8C in the package 30 of the first embodiment. The rows of slits 64 in the first package wall 52 overlie and are aligned with three corresponding rows of slits 64 in the second package wall 54. The package 50 is opened by grasping the fold 62B and pulling it along the rows of slits.

The package 50 is formed by modifying the film 2 shown in Figure 4 such that the rows of slits 64 replace the rows 8 and are disposed along the area of the film 2 where the fold 62B will be formed. The modified film is folded to form a tube and the first and second side edges 4 and 6 of the modified film are heat sealed together to form the back seal 60. A bottom seal 58 is formed and the package 50 is filled such as by a vertical form fill machine. The top seal 56 is formed after product is disposed within the package 50.

A slightly modified package 70 is shown in Figure 9. This package 70 differs from the package 50 in that only one set of rows of slits 72A, 72B, 72C is disposed in the package 70. As in previous embodiments, these rows of slits 72 extend through the outer layer of the first package wall but not the inner layer of the first package wall. These rows of slits 72 are disposed opposite the back seal 74 of the package 70. This package 70 may be opened by applying force along the back seal 74 and bursting the product through the package 70 in the area of the rows of slits 72. The package 70 is manufactured similar to the package 50 with appropriate modifications in the film 2 to provide for one set of rows of slits 72 disposed opposite the back seal 74.

An additional embodiment of the present invention is shown in Figures 10 and 11 The package 80 of this embodiment has a first package wall 82 and a second package wall 84. The second package wall 84 is attached to the first package wall 82 along the edges thereof. The first package wall 82 is similar in construction to the first package wall 32 of the package 30 of Figure 1. The second package wall 84 can be constructed of any suitable polymer material, paper, foil or any combination thereof. In the preferred embodiment, the second package wall 84 is made of a formed material such as a four mil construction of nylon/barrier/sealant as, for example, the material sold by Curwood, Inc. under the designation CURLON® Grade 858. The first package wall 82 includes a plurality of rows of linearly oriented slits 86A, 86B, 86C disposed along a central portion thereof, parallel and adjacent to the side edges of the package 80. The rows of slits 86 are formed similar to the rows of slits 8A, 8B, 8C of the package 30. The package 80 is opened similar to the package 70, by applying force to the second package wall 84 and bursting the product out through the first package wall 82 in the area of the rows of slits 86. Alternatively, downward force can be exerted on the slits 86 causing both layers of film to rupture along the rows of slits thereby providing access to the product in the product receiving chamber.

The first package wall 82 can be formed by modifying the film 2 such that one set of rows of slits 86 is formed in the film 2. The film 2 can then be cut to the desired size.

The second package wall 84 is formed into the desired shape and a product is dispensed into the product receiving chamber formed between package walls 82 and 84. The first package wall 82 is secured to the second package wall 84 along the outer edges either by heat or adhesive such that the rows of slits 86 overlie the product receiving chamber.

## Claims

1. An easy open package adapted to enclose a product but provide easy access thereto when desired, said package comprising a first package wall (32) formed of multi-layer flexible packaging film including an inner layer (7A) positioned to lie adjacent the product to be packaged and an outer layer (9A) secured to said inner layer (7A); a second package wall (33) overlying said first package wall including an inner layer and an outer layer; means (34A,35, 34B,44) enclosing said package about its periphery such that a product receiving chamber is formed between said first (32) and second (33) package walls; at least one row (8A,8B,8C) of linearly oriented slits in said first package wall (32), said slits penetrating through one layer of said first package wall but not extending into said other layer; at least one row (8A,8B,8C) of linearly oriented slits in said second package wall (33), said slits penetrating through one layer of said second package wall but not extending into said other layer; said slits in said first and second package walls being disposed over said product receiving chamber, whereby said slits in said layers of said first (32) and second (33) package walls facilitate the rupture of the other layers of said first and second package walls secured thereto, when force is applied, to effect easy opening of said package along the row (8A,8B,8C) of slits and to provide ready access to the product in said product receiving chamber.

2. A package according to claim 1, in which said second package wall (33) is also formed of a multi-layer flexible packaging film including an inner layer (7B) positioned to lie adjacent the product to be packaged and an outer layer (9B) secured to said inner layer (7B).

3. A package according to claim 1 or 2, in which said slits of said first package wall (32) overlie and are substantially linearly aligned with said slits of said second package wall (33).

4. A package according to claim 1,2 or 3, in which said means (34A,35,34B,44) enclosing said package include seal means (34A,34B) extending across one or more of the peripheral edges of said package.

5. A package according to claim 1,2,3 or 4, in which each said row (8A,8B,8C) of linearly extending slits defines a score line extending continuously from one package edge to another, the score lines being preferably parallel.

6. A package according to any of claims 1 to 5, including a plurality of rows (8A,8B,8C), preferably three, of linearly oriented slits in each said package wall (32,33), each row being laterally separated from and extending parallel to its adjacent row of slits.

7. An easy open package adapted to enclose a product but provide easy access thereto when desired, said package including a first package wall (32) formed of multi-layer flexible packaging film including an inner layer (7A) positioned to lie adjacent the product to be packaged and an outer layer (9A) secured to said inner layer (7A); a product receiving chamber defined in said package; means (34A,34B,35,44) enclosing said package about its periphery; a plurality of rows (8A,8B,8C) of linearly oriented slits in said first package wall (32), each row extending from one edge of said package to another edge, each row being laterally separated from and extending parallel to its adjacent row of slits, each slit penetrating through one layer of said first package wall but not extending into said other layer, said slits disposed over said product receiving chamber, whereby said slits in said one layer of said first package wall (32) facilitate the rupture of the other layer when force is applied to effect easy opening of said package along the rows of slits and to provide ready access to the product in said product receiving chamber.

8. A package according to claim 7, in which said means enclosing said package include seal means (34A,34B) extending across one or more of the peripheral edges of said package.

9. A package according to claim 7 or 8, in which each said row (8A,8B,8C) of linearly extending slits defines a score line extending continuously from one package edge to another.

10. A package according to claim 9, in which each said row (8A,8B,8C) of linearly extending slits defines a plurality of individual score lines linearly separated from each other and extending from one package edge to another.

11. A package according to claim 7 or 8, including three rows (8A,8B,8C) of linearly oriented slits in each said package wall, each row being laterally separated from and extending parallel to its adjacent row of slits.

12. A package according to claim 7,8,9,10 or 11, including a second package wall (33) having an inner layer (7B) and an outer layer (9B) overlying said first package wall (32), said product receiving chamber formed between said first (32) and second (33) package wall.

13. A package according to claim 12, including a plurality of rows (8A,8B,8C) of linearly oriented slits in said second package wall (33), each row extending from one edge of said package to another edge, each row being laterally separated from and extending parallel to its adjacent row of slits, each slit penetrating through one layer of said second package wall but not extending into said other layer, said slits disposed over said product receiving chamber.

14. A package according to claim 13, in which said slits of said first package wall (32) overlie and are substantially linearly aligned with said slits of said second package wall (33).

15. A flexible packaging film (2) especially adapted for use in making an easy open package, said film comprising a multi-layer flexible packaging film including an inner layer (7) and an outer layer (9) with a plurality of rows (8A,8B,8C) of linearly extending slits (8) formed in one layer thereof extending parallel to and inwardly adjacent a side edge (4,6) of said film, said slits (8) penetrating through one of said layers (9) but not extending into said other layer (7), each row being laterally separated from and extending parallel to its adjacent row of slits, whereby said slits facilitate the rupture of all layers of said film, when force is applied, to effect easy opening of a package made from said film.

16. A film according to claim 15, in which said inner (7) and outer (9) film layers are secured to each other.

17. A film according to claim 15 or 16, in which each said row (8A,8B,8C) of linearly extending slits (8) defines a score line extending continuously parallel to and inwardly adjacent from said side edge (4,6) of said film.

18. A film according to claim 15,16 or 17, in which each said row (8A,8B,8C) of linearly extending slits (8) defines a plurality of individual score lines linearly separated from each other, extending parallel to and inwardly adjacent from said side edge (4,6) of said film.

19. A film, according to claim 15,16,17 or 18, including three rows (8A,8B,8C) of linearly oriented slits (8) formed in said one layer (9), each row being laterally separated from and extending parallel to its adjacent row of slits.

20. A process for producing a multi-layer flexible packaging film especially adapted for use in making an easy open package, the steps of the process including forming a plurality of rows (8A,8B,8C) of laterally spaced, linearly extending slits (8) in one layer (11) of said film, said slits extending parallel to and inwardly adjacent a side edge (4,6) of said layer; and laminating a second layer (24) of film to said first layer (11).

21. A process according to claim 20, in which three rows (8A,8B,8C) of linearly oriented slits (8) are formed in said first layer (11), each row being laterally separated from and extending parallel to adjacent rows of slits.

22. A process according to claim 20 or 21, in which said lamination step is accomplished by adhesive lamination.

23. A process for producing an easy open package adapted to enclose a product but provide easy access thereto when desired, the steps of the process including providing a first package wall (32) of multi-layer flexible packaging film including an inner layer (7A) positioned to lie adjacent the product to be packaged and an outer layer (9A) secured to said inner layer (7A); forming at least one row (8A,8B,8C) of linearly oriented slits (8) in said first package wall (32) extending parallel to an edge (4) of said package wall, said slits penetrating through one layer (9A) of said first package wall but not extending into said other layer (7A); providing a second packaging wall (33) including an inner layer (7B) and an outer layer (9B); forming at least one row (8A,8B,8C) of linearly oriented slits (8) in said second package wall (33) extending parallel to an edge (6) of said second package wall (33), said slits penetrating through one layer (9B) of said second package wall (33) but not extending into said other layers (7B); and securing said first package wall (32) to said second package wall (33) about the periphery thereof such that a product receiving chamber is formed between said first (32) and second (33) package walls.

24. A process according to claim 23, including the step of substantially aligning the rows (8A,8B,8C) of slits (8) in said first package wall (32) with the rows (8A,8B,8C) of slits (8) in said second package wall (33) to thereby ensure easy opening of said package.
